# EUROPEAN PATENT SPECIFICATION

(11) **EP 2 354 474 B1**
(45) Date of publication and mention of the grant of the patent: **09.11.2016**
(21) Application number: 10001130.3
(22) Date of filing: 04.02.2010
(51) Int. Cl.: F01K 3/00, F01K 3/02, F01K 17/02

(54) **Co-generation power station with heat accumulator and increased electric power output**
Heizkraftwerk mit Wärmespeicher und erhöhtem elektrischem Leistungsausgang
Station d'alimentation à cogénération et accumulateur de chaleur et sortie d'alimentation électrique améliorée

(43) Date of publication of application: 10.08.2011
(73) Proprietor: General Electric Technology GmbH, 5400 Baden (CH)
(72) Inventor: Legin, Mathhias, 67227 Frankenthal (DE); Kitzmann, Ewald, 69469 Weinheim (DE); Schüle, Volker, 69181 Leimen (DE)
(74) Representative: General Electric Technology GmbH

(56) References cited:
- DE-B- 1 232 792
- DE-B- 1 233 211
- GB-A- 660 090
- US-A1- 2003 213 245

## Description

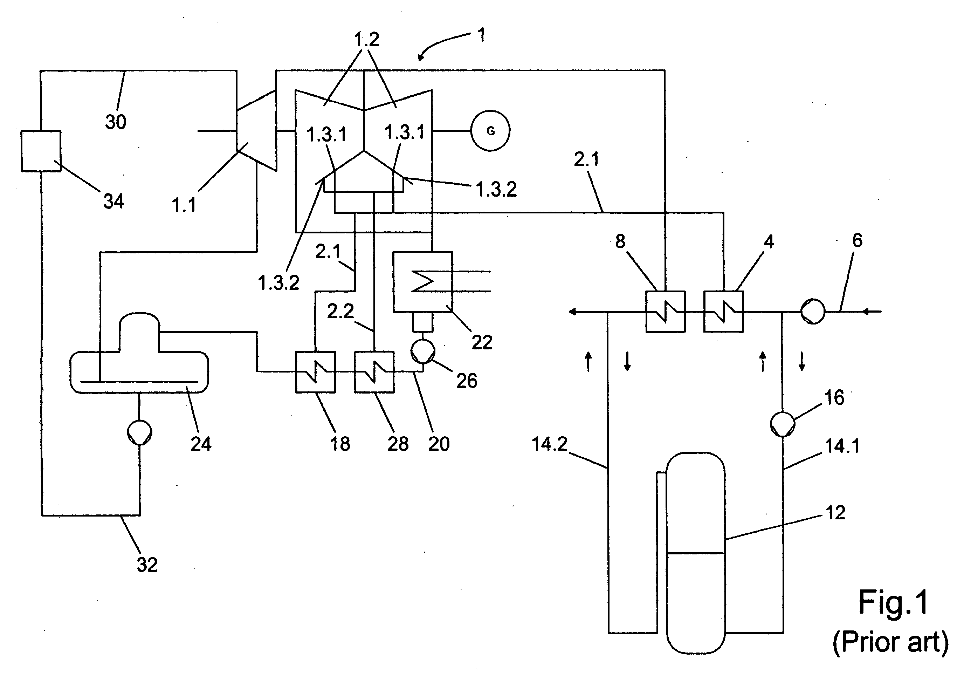

In co-generation power stations electricity and heat are produced, in order to achieve an optimal utilization of the used fuel. As the demand for electricity and heat is often temporarily shifted, in district heating systems heat accumulators are used, in order to decouple the electricity and heat production from each other, and constitute the prior art for accumulating thermal energy in district heating systems. Such a system is exemplarily shown in figure 1 and described in the following.

The co-generation power station according to the prior art shown in figure 1 as block diagram, comprises a steam turbine 1 with a high-pressure part 1.1 and a low-pressure part 1.2 designed as bleeder type steam turbine. The low-pressure part 1.2 of the steam turbine 1 has tapping points 1.3.1 and 1.3.2 at various pressure and temperature levels.

The tapping points 1.3.1 are brought together in a first tapping conduit 2.1, which in its turn provides a first heat condenser 4 with steam.

The first heat condenser 4 is arranged between a return flow of a district heating line 6 and a forward flow of the district heating line 6. In series with the first heat condenser 4 a second heat condenser 8 is arranged, upon demand being provided with steam by the high-pressure part 1.1 of the steam turbine and thus contributing to a further heating of the heat carrier, in the following also designated as district heating water, circulating in the district heating line 6.

Parallel to the heat condensers 4 and 8 a heat accumulator 12 is arranged, being connected with the district heating line 6 via connecting lines 14. In the connecting line 14 a first pump 16 is arranged, which can e. g. be designed as speed-controlled pump.

When the heat accumulator 12 is to be loaded, downstream of the second heat condenser 8 the heated district heating water is conveyed thereto via the section 14.2 of the connecting line 14 at the upper end of the heat accumulator 12. An identical quantity of cold water is removed at the lower end of the heat accumulator 12 and reintroduced into the return flow of the district heating line 6, i. e. in this embodiment upstream of the first heat condenser 4. Thus, it is possible to heat the heat carrier of the district heating line by means of the bleeder type steam in the condensers 4 and 8 and, should the heat demand in the district heating grid be too small, temporarily accumulate it in the heat accumulator 12.

The tapping point 2.1 additionally provides a second low-pressure feed water heater 18 via first tapping conduit 2.1 with steam upon demand. The second feed water heater 18 is connected with a feed water conduit 20. The feed water conduit 20 connects a condenser 22 with a feed water tank 24. For this purpose a second pump 26, which can also be designed as speed-controlled pump, is arranged in the feed water conduit 20. Upstream of the second feed water heater 18 a first feed water heater 28 is arranged being provided with bleeder type steam from the second tapping point 1.3.2.

The steam turbine 1 is provided with fresh steam via a steam line 30. The feed water tank 24 is connected with the steam generator 34 via a feed water line 32.

With this co-generation power station according to the prior art shown in figure 1 it is possible, within certain limitations, to decouple the electricity generation from the heat generation and, should much electricity, but little heat be demanded, to temporarily accumulate the heat occurring during the electricity generation in the heat accumulator 12. In summer resp. in times with low heat demand the heat accumulator 12 cannot be used, due to lack of heat demand in the district heating net. Furthermore, it is a characteristic of this co-generation power station known from the prior art that the electricity generation then is maximal, when no heat is emitted via the heat condensers 4 and 8 to the district heating grid resp. the district heating line 6.

The liquid heat carrier provided in the district heating grid is preheated by means of turbine bleeder type steam in the heat condensers. In order to load the heat accumulator, district heating water, having been preheated in one or several heat condensers, is reintroduced into the heat accumulator and thus the sensitive heat contained in the district heating water is accumulated.

Heat accumulators in district heating nets take over the heat supply in times of high electric output demand and consequently allow to make use of the electric output of a tapping condensation block released during the interruption of the heat steam tapping for the covering of electric peak load. The electricity production of the co-generation power station shown in figure 1 then is maximal, when no steam is required in the heat condensers 4 and 8 and thus the complete steam generated in the steam generator 34 can be used for generating electricity in the steam turbine 1.

However, the heat accumulated in the heat accumulator cannot be used to generate electric peak load. In other words:
In the co-generation power stations known from the prior art the heat accumulators can exclusively be used to cover the district heating load. In times during which no or only little district heating is required, as for example in summer, the heat accumulators cannot be used.

From DE 1 232 792 a combined gas turbine and steam turbine is known for the co-generation of electricity and heat for a heating grid.

Heat is transferred from the flue gas of the gas turbine via the first heat exchanger and a second heat exchanger to raise the temperature of the condensate before entering in the feed water tank.

From DE 1 233 211 it is known that the heating grid 10 can alternatively be supplied with heat from either the flue gas of the gas turbine or the steam turbine.

It is the object of the present invention to develop a co-generation power such that the heat accumulator can be used more often and thus the efficiency of the complete installation resp. its capacity are improved.

According to the invention it is now provided to equip a co-generation power station comprising a steam turbine with at least one feed water heater, at least one heat condenser for heating the heat carrier circulating in the district heating grid and a heat accumulator connected to the district heating - net, to arrange at least one heat exchanger parallel to at least one feed water heater, the cold side of which can be streamed through by feed water and the warm side of which can be connected with the heat accumulator.

Thus it is possible to preheat the feed water by means of the energy accumulated in the heat accumulator and correspondingly reduce the demand of bleeder type steam for the feed water preheating. This means that, assuming an identical firing output of the boiler, the electric output of the co-generation power station can be increased, as the complete or a greater part of the steam generated by the boiler can be employed in the turbines and used for generating electricity. Consequently the maximum electricity generation can be raised!

With the co-generation power station according to the invention it is possible to use the sensitive heat accumulated in the heat accumulator 12 for the feed water preheating and thus significantly reduce the steam demand, especially of the low-pressure feed water heater 18 and 28. Consequently more steam for the production of electricity is available and with identical firing output of the steam generator 34 the electric output of the power station can be increased as long as the heat accumulator can deliver enough heat.

The apparative preconditions required for this purpose are very small, so that it is often possible to retrofit the invention with existing co-generation power stations. When one heat accumulator for the temporary accumulation of thermal energy is already existent, only one heat exchanger is necessary which is connected parallel to the feed water preheaters and upon demand provided with the heat energy accumulated in the heat accumulator, in order to reduce the demand of steam for the feed water preheating. Thus it is possible to increase not only the electricity production but also the peak load generation. It is also possible to economically use the heat accumulator even in times of weak heat demand, e. g. in summer. Furthermore it is possible to use the co-generation power station by means of the method according to the invention and the heat exchanger according to the invention to provide peak loads. Finally, it is also possible to optimize the operating manner of the co-generation power station and to equalize peaks, increasing the efficiency and reliability of the installation.

In further advantageous embodiments of the invention it is provided that the cold side of the heat exchanger according to the invention is connected to a feed water line of the co-generation power station via a bypass line. In order to be able to control resp. regulate the flow-through quantity of the feed water through the cold side of the heat exchanger, at least one blocking or control valve is arranged in the bypass line. Similarly the warm side of the heat exchanger is connected to the heat accumulator via a connecting line. Here as well for the regulation of the quantity of heat carrier flowing through the warm side of the heat exchanger at least one blocking or electricity control valve is provided. Alternatively it is, of course, also possible to use in the bypass line or in the connecting line respectively a preferably speed controlled pump. However, this usually is not necessary, as the pumps existent in the feed water line resp. the district heating line have sufficient output reserves in order to provide the bypass line resp. the connecting line, i. e. the heat exchanger, with heat carrier (feed water resp. district heat water) on the cold side as well as on the warm side.

Further advantages and advantageous embodiments of the invention can be taken from the following drawing and the specification.

The invention allows an input of the installation P = P_{add} + P_{max_district heat=0} exceeding the output resulting without operation of the heat condensers (P_{max_district=0}) , as the accumulated thermal energy can be used via an additional heat exchanger for the preheating of condenser water in the water-steam-cycle and thus for the preserving of bleeder type steam of the turbine.

The invention also comprises a method for operating a co-generation power station, wherein in times of electric or thermal weak load thermal energy is used in order to load a heat accumulator. In times of increased electric demand the accumulated thermal energy can be used in order to preheat the feed water and to provide additional electric output.

By means of the invention the amount of the electric additional output is essentially increased, more than this is possible by conventionally using heat accumulators in district heating nets.

Especially in electric weak load times power stations can be operated only with a determined minimal load. However, it is increasingly requested by the net operators to supply even less electric output to the net (reduction of the electric minimal load). The maintenance of the power station operation below this minimal load, however, can only be guaranteed with the use of expensive additional fuel, as only this ensures a stabile firing in the steam generator.

The described method enables to improve the minimal-load capacity of the power station by loading the heat accumulator in electric weak load times. By the loading of the heat accumulator the firing output of the steam generator with minimal load can be kept constant without requiring expensive additional fuel. As described above, more turbine bleeder type steam is required, which finally leads to a reduction of the electric output (improvement of the minimal load capacity).

Furthermore by means of the invention, especially in thermal weak load times (e. g. in summer), the electricity and heat production can be decoupled from each other in a higher degree. The invention is of special advantage for the following employments:
Provision and generation of peak load electricity.
Provision and generation of regulating energy.

Smoothing of daily load curve (equalizing of load peaks and valleys).

### Drawing

It is shown in:
- Figure 1: a co-generation power station with heat accumulator according to the prior art,
- Figure 2: an embodiment of a co-generation power station with heat accumulator when loading the heat accumulator according to the invention, and
- Figure 3: the co-generation power station according to the invention as per figure 2 when unloading the heat accumulator for the generation of additional peak load.

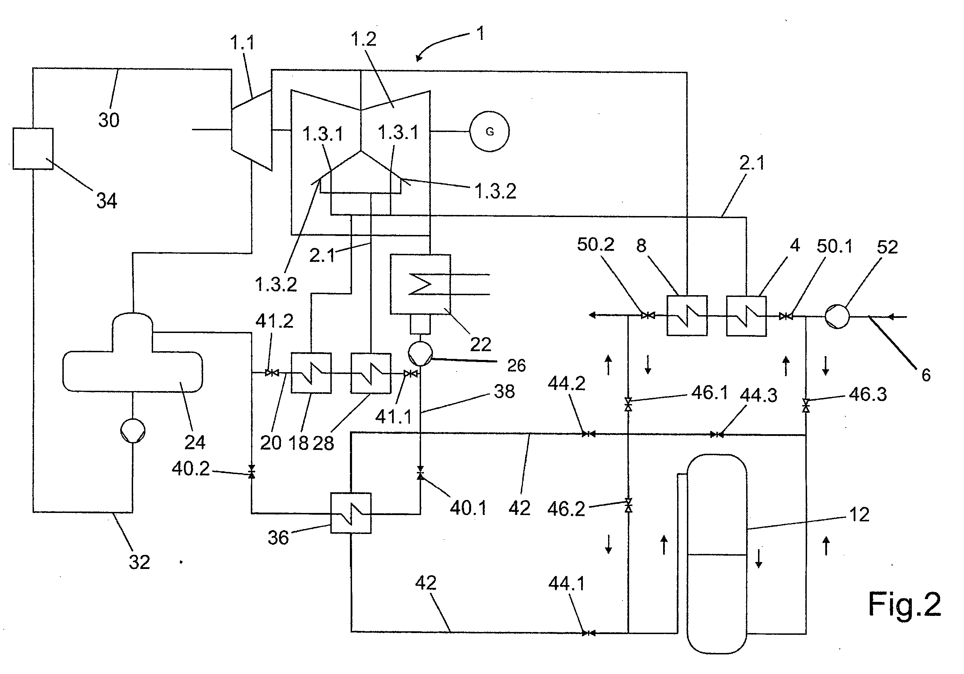

Figure 2 constitutes an embodiment of a co-generation power station according to the invention, having large analogies with a co-generation power station according to figure 1. Corresponding components are provided with corresponding reference numerals and the statements made in connection with figure 1 correspondingly apply. With the co-generation power station according to the invention as per figure 2 an additional heat exchanger 36 is arranged, the cold side of which is connected to the feed water line 20 of the water steam cycle via a bypass line 38. In the bypass line 38 upstream and downstream of the heat exchanger 36 resp. one electricity control valve 40.1 and 40.2 are arranged, which are closed in the operation condition shown in figure 2.

This means that no feed water streams through the bypass line 38 and the heat exchanger 36 and consequently the feed water preheating takes place conventionally, as shown in figure 1, in the feed water preheaters 18 and 28. When little heat is demanded in the district heating net, the heat accumulator 12 can be loaded in this operation condition. This loading of the heat accumulator 12 takes place via the heat condensers 4 and 8 in the same way as already described on the basis of figure 1.

The warm side of the heat exchanger 36 is connected with the heat accumulator 12 via a connecting line 42. Here as well in the connecting line 12 various control valves 44.1, 44.2 and 44.3 are arranged with the purpose of being able to control the quantity of the district heat water flowing through the heat exchanger. With the condition shown in figure 2 the control valves 44.1, 44.2 and 44.3 are closed. The control valves 46.1, 46.2 and 46.3 provided in the connecting line 14.1 and 14.2 are opened, so that the heat accumulator 12 can be loaded in the same way as described in connection with figure 1. In this operation condition the co-generation power station according to the invention is operated like a conventional co-generation power station, as the heat exchanger 36 is not in operation.

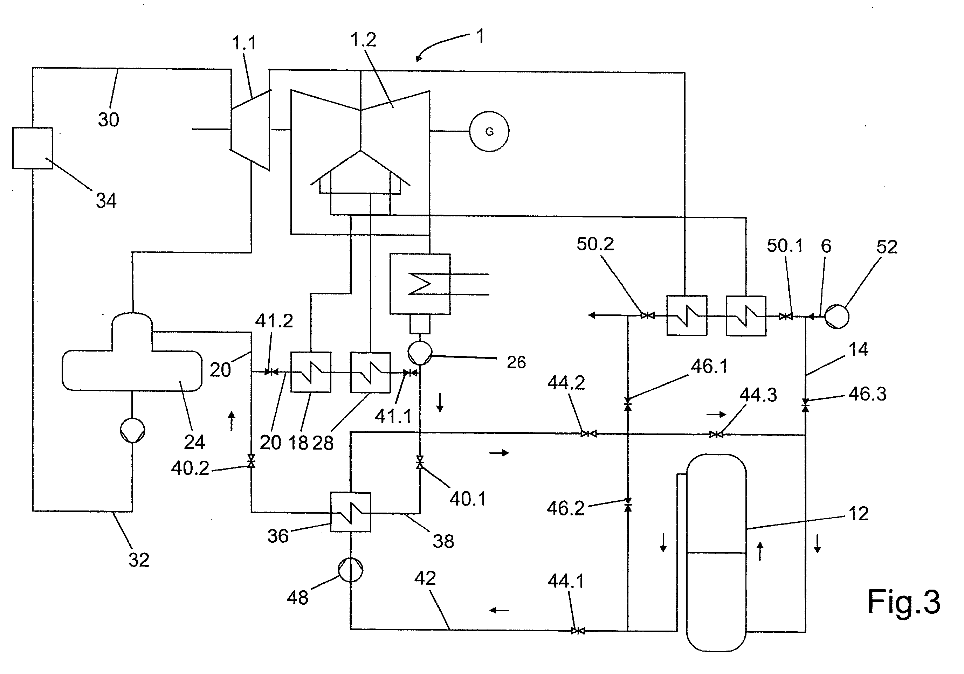

When in times of weak district heat demand the electricity generation of the co-generation power station is to be maximized, according to the invention this is achieved by means of activating the heat exchanger 36. In figure 3 an operation condition is shown, in which no or only very little district heat is demanded and the generation of electric energy is maximized according to the invention. For this purpose the heat exchanger 36 is activated by opening the control valves 40.1 and 40.2 in the bypass line 38. The control valves 41.1 in the feed water line 20 are closed, so that no steam is required in the feed water preheaters 18 and 28. Instead the boiler feed water streaming through the bypass line 38 is preheated in the heat exchanger 36 without requiring steam from the steam turbine 1. Afterwards the feed water preheated in the heat exchanger 36 streams back into the feed water line 20 and from there into the feed water tank 24.

The so-called warm side of the heat exchanger 36 is supplied with heat from the heat accumulator 12 via the connecting line 42. For this purpose the control valves 44.1, 44.2 and 44.3 are opened, whereas the control valves 46.1 to 46.3 in the line 14 are closed. For the purpose of conveying the district heat water from the heat accumulator 12 into the heat exchanger 36, an additional pump 48 is installed in the connecting line 42. As can be seen from figure 3, in this operation condition district heat is still generated, as the heat condensers 4 and 8 are provided with bleeder type steam from the turbine 1, when the electricity control valves 50.1 and 50.2 are opened. When, for example due to lacking heat demand, the control valves 50.1 and 50.2 (not shown) in the district heat line 6 are closed, the electric output of the steam turbine is once more increased, as the complete steam provided by the steam generator 34 can be used for generating electricity. As in this condition the low pressure feed water preheaters 18 and 28 require no steam, the electric output of the co-generation power station according to the invention even exceeds the peak performance achievable in the normal operation without heat demand.

Because, as a comparison of the figures 2 and 3 shows, the heat exchanger 36 can be actuated in a very simple manner by switching some electricity control valves (40, 41, 44, 46 and, if necessary, 50), the alteration in the operation condition can be achieved very quickly and insofar short-timed load peaks as well can be pursued by means of the co-generation power station according to the invention and the method according to the invention, without changing the firing output of the steam generator 34 and much more. Thus, the co-generation power station according to the invention can also be employed for providing control energy and additionally for generating peak load. As the co-generation power station according to the invention requires only comparatively small investments into a heat exchanger, some lines 38, 42 as well as some control valves 40, 41, 44, 46 and 50, the method according to the invention and the co-generation power station according to the invention are economically very attractive and make it possible to avoid shortages in the peak load provision.

The heat accumulator and the pertaining heat exchanger are installed in the district heating grid of the co-generation power plant parallel to the heat condensers. The feed locations can be individually defined. Employing the method allows to circumvent one or several heat condensers.

The heat exchanger is installed in the water-steam-cycle of the co-generation power station parallel to the low-pressure preheater passage. The feed locations can be individually defined. Employing the method allows to circumvent one or several low-pressure preheaters and to flexibly design the degree of the electric additional output/the electric reduced output.

The heat accumulator 12 is preferably designed as cylindrical, stationary heat accumulator and always filled with district heat water. Depending on the operation condition of the heat accumulation installation hot and/or cold district heat water is accumulated in the heat accumulator.

At the upper and warm end of the heat accumulator 12 hot district water is fed and tapped. At the lower and cold end of the heat accumulator 12 cold district heat water is fed and tapped. Between hot and cold district heat water due to the density differences between hot and cold district heat water a separation layer (without reference numerals in figures 2 and 3) occurs. The temperature layering in the accumulator is important for the function and efficiency of the heat accumulator. Insofar, besides suitable feed and tapping devices and corresponding heat insulation, above all the constructive design of the heat accumulator has to be taken into consideration.

With a given volume possibly high heat accumulators 12 with a small basic surface have to be used, in order to minimize the energy loss by mixing of cold and warm district heat water. If provided, existing heat accumulators can also be resorted to. Besides the positive thermodynamic influences of a small water surface as further advantage a smaller basic surface demand has to be noted. The load condition of the heat accumulator 12 is detected by means of temperature sensors (not shown) being vertically attached in intervals at the heat accumulator casing.

When loading the heat accumulator 12 the preheated district heat water is conveyed at the upper end of the heat accumulator by means of special loading appliances, which possibly are to avoid a mixing of the warm with the cold district heat water. The same quantity of cold district heat water is tapped from the heat accumulator in the region of the heat accumulator floor. By means of this method the separating layer migrates in direction of the heat accumulator floor while loading the accumulator.

By means of this method for the duration of the accumulating process the electric output of the co-generation power station is reduced, because the bleeder type steam taken from the turbines can no longer be expanded in the turbine, but is used for preheating the district heat water.

The heat accumulator 12 is completely loaded, when the heat accumulator is completely filled with hot district heat water. The tapped cold district heat water is conveyed with the district heating net. The feeding into the district heating grid can be flexible in this way.

When unloading, according to the invention, the thermal energy stored in the heat accumulator 12 (cf. figure 3) the is reintroduced into the power station process thus raising the maximum electricity generation.

As further switching variation it is also possible to re-feed the district heating water cooled in the heat exchanger, but still sufficiently warm for heating purposes into the district heating net. Wherein it must be ensured that simultaneously cold district heating water is tapped before an optional heat condenser and conveyed to the floor of the heat accumulator, to keep the water level in the heat accumulator constant.

The unloading, according to the invention, of the heat accumulator 12 allows an increased electric output compared with the normal operation of the co-generation power station without heat emission to the district heating net, because at least one of the low-pressure preheaters is taken out of operation and thus less or even no bleeder type steam streams into the low-pressure preheater. For this reason the saved bleeder type steam can stream through the turbine, where its enthalpy can be used for the generation of additional electric energy.

It is advantageous that as accumulation medium a liquid heat carrier, as e. g. district heating water, and no steam is used. Thus the apparative effort for the required components is reduced due to the lower operation parameters (pressure and temperature). The security as well can more easily be guaranteed.

The co-generation power station according to the invention and the method according to the invention for operating a co-generation power station allow to more quickly react to load fluctuations (positive and/or negative) than is the case with conventional co-generation power stations.

By integrating a heat accumulator 12 into an existing co-generation power station the flexibility of the installation is increased. Especially in thermal weak load times (time of day, season) a bigger utilization of the power station and an improved supply of electric peak load can be achieved.

The described method allows to decouple heat and electricity generation to a greater extent than so far in co-generation power stations, especially heat-operated co-generation power stations, especially to increase the degree of electric additional output and thus the efficiency.

Start-up and interruption processes, frequent load changes and sub-optimal partial load operations are minimized by integrating a heat accumulator installation into an existing co-generation power station.

A further advantage is that in many co-generation power stations heat accumulators 12 are already installed, so that they can be resorted to, thereby reducing the overall costs for the implementation of the method according to the invention. In the ideal case solely the heat exchanger according to the invention including the lines and the control organs must be installed and the conveyance technique adapted.

The required wall strength of the cylindrical heat accumulator increases in proportion with the heat accumulator diameter and the internal pressure. In order to minimize the investment costs of the heat accumulator the heat accumulator installation can have various designs:
Heat accumulation installation with displacement reservoir (design of the heat accumulator depending on the maximally occurring pressure in the district heating net)
Heat accumulation installations with heat accumulator being filled only up to 90%. The level regulation is guaranteed by means of control fittings. (Cost reduction by guaranteeing the heat accumulator with normal operation pressure)

The integration of the heat accumulation installation is flexible and can be adapted to the individual steam power station requirements. Thus it is possible by means of the invention to integrate the heat accumulator 12 before the first and behind the last low-pressure preheater or to integrate the heat accumulation installation into the water-steam-cycle of the co-generation power station before an optional or behind an optional low-pressure preheater by means of the heat exchanger.

Wherein it is also possible according to the invention to integrate the heat accumulator 12 before the first and behind the last heating condenser or to integrate the heat accumulation installation into the water-steam-cycle of the co-generation power station before an optional or behind an optional heating condenser by means of the heat exchanger.

Where the heat accumulation installation is actually integrated depends on the individual circumstances, especially the temperature level, but also the possibly already existing components and lines, etc.

### Reference numbers

- 1: gas turbine
- 2: combustor
- 3: compressor
- 4: heat exchanger
- 5: fuel supply
- 6: heat exchanger
- 10: heating grid
- 11: heat consumer
- 12: condensate pump
- 13: low pressure preheater
- 14: feed water tank
- 16: high pressure preheater
- 17: steam generator
- 18: superheater
- 19: high pressure steam turbine
- 21: medium pressure steam turbine
- 22: low pressure steam turbine
- 23, 24: control valves
- 26: heat exchanger
- 27: fluid pump
- 28, 29: control valves
- 31: heat accumulator

## Claims

1. Co-generation power station comprising a steam turbine (1), at least one feed water preheater (28, 18), at least one heat condenser (4, 8) for preheating a heat carrier circulating in a district heating grid (6) and a heat accumulator (12) connected to the district heating grid (6), **characterized in that** parallel to at least one feed water preheater (28, 18) a heat exchanger (36) is arranged, the cold side of which is configured and arranged to be streamed through by feed water and the warm side of which is configured and arranged to be connected with the heat accumulator (12).

2. Co-generation power station according to one of the preceding claims, **characterized in that** the cold side of the heat exchanger (36) is connected to a feed water line (20) via a bypass line (38).

3. Co-generation power station according to claim 2, **characterized in that** at least one control valve (40.1, 40.2) is arranged in the bypass line (38).

4. Co-generation power station according to one of the preceding claims, **characterized in that** the warm side of the heat exchanger (36) is connected to the heat accumulator (12) via a connecting line (42).

5. Co-generation power station according to claim 4, **characterized in that** at least one control valve (44.1, 44.2, 44.3) is arranged in the connecting line (42).

6. Co-generation power station according to one of the preceding claims, **characterized in that** the steam turbine (1) is designed as a bleeder type steam turbine.

7. Co-generation power station according to one of the preceding claims, **characterized in that** the heat accumulator (12) is arranged parallel to the at least one heat condenser (4, 8).

8. Co-generation power station according to one of the preceding claims, **characterized in that** in a feed water line (20) upstream and/or downstream of the at least one feed water preheater (28, 18), a control valve (41.1, 41.2) is arranged.

9. Co-generation power station according to one of the preceding claims, **characterized in that** in the district heating grid (6) upstream and/or downstream of the at least one heat condenser (4, 8), a control valve (50.1, 50.2) is arranged.

10. Co-generation power station according to claim 1, **characterized in that** a pump (16, 48) is arranged in a connecting line (14, 42).

11. Co-generation power station according to any one of claims 8 to 10, **characterized in that** a pump (26) is arranged in the feed water line (20).

12. Co-generation power station according to one of the preceding claims, **characterized in that** a pump (16) is arranged in the district heating grid (6).

13. Method for operating a co-generation power station comprising a steam turbine (1), at least one feed water preheater (28, 18), at least one heat condenser (4, 8) for preheating a heat carrier circulating in a district heating grid (6) and a heat accumulator (12) connected to the district heating grid (6), **characterized in that** the feed water can be preheated using heat stored in the heat accumulator (12).

14. Method according to claim 13, **characterized in that** the feed water is preheated using heat stored in the heat accumulator (12) in case of high electricity demand.

15. Method according to claim 13, **characterized in that** the heat accumulator (12) is loaded in case of little heat demand in the district heating grid (6) and/or little electricity demand.

## Patentansprüche

1. Heizkraftwerk, das eine Dampfturbine (1), wenigstens einen Speisewasservorwärmer (28, 18), wenigstens einen Wärmekondensator (4, 8) zum Vorheizen eines Wärmeträgers, der in einem Fernwärmenetz (6) zirkuliert, und einen Wärmespeicher (12) aufweist, der mit dem Fernwärmenetz (6) verbunden ist, **dadurch gekennzeichnet, dass** parallel zu wenigstens einem Speisewasservorwärmer (28, 18) ein Wärmetauscher (36) angeordnet ist, dessen Kaltseite, dazu eingerichtet und angeordnet ist, von Speisewasser durchströmt zu werden, und dessen Warmseite dazu eingerichtet und angeordnet ist, mit dem Wärmespeicher (12) verbunden zu sein.

2. Heizkraftwerk nach einem der vorhergehenden Ansprüche, **dadurch gekennzeichnet, dass** die Kaltseite des Wärmetauschers (36) über eine Nebenstrom-Leitung (38) mit einer Speisewasserleitung (20) verbunden ist.

3. Heizkraftwerk nach Anspruch 2, **dadurch gekennzeichnet, dass** in der Nebenstrom-Leitung (38) wenigstens ein Steuer-/Regelventil (40.1, 40.2) angeordnet ist.

4. Heizkraftwerk nach einem der vorhergehenden Ansprüche, **dadurch gekennzeichnet, dass** die Warmseite des Wärmetauschers (36) über eine Verbindungsleitung (42) mit dem Wärmespeicher (12) verbunden ist.

5. Heizkraftwerk nach Anspruch 4, **dadurch gekennzeichnet, dass** in der Verbindungsleitung (42) wenigstens ein Steuer-/Regelventil (44.1, 44.2, 44.3) angeordnet ist.

6. Heizkraftwerk nach einem der vorhergehenden Ansprüche, **dadurch gekennzeichnet, dass** die Dampfturbine (1) als eine Abzapfdampfturbine konstruiert ist.

7. Heizkraftwerk nach einem der vorhergehenden Ansprüche, **dadurch gekennzeichnet, dass** der Wärmespeicher (12) parallel zu dem wenigstens einen Wärmekondensator (4, 8) angeordnet ist.

8. Heizkraftwerk nach einem der vorhergehenden Ansprüche, **dadurch gekennzeichnet, dass** in einer Speisewasserleitung (20) stromaufwärts und/oder stromabwärts des wenigstens einen Speisewasservorwärmers (28, 18) ein Steuer-/Regelventil (41.1, 41.2) angeordnet ist.

9. Heizkraftwerk nach einem der vorhergehenden Ansprüche, **dadurch gekennzeichnet, dass** in dem Fernwärmenetz (6) stromaufwärts und/oder stromabwärts des wenigstens einen Wärmekondensators (4, 8) ein Steuer-/Regelventil (50.1, 50.2) angeordnet ist.

10. Heizkraftwerk nach Anspruch 1, **dadurch gekennzeichnet, dass** eine Pumpe (16, 48) in einer Verbindungsleitung (14, 42) angeordnet ist.

11. Heizkraftwerk nach einem beliebigen der Ansprüche 8 bis 10, **dadurch gekennzeichnet, dass** eine Pumpe (26) in der Speisewasserleitung (20) angeordnet ist.

12. Heizkraftwerk nach einem der vorhergehenden Ansprüche, **dadurch gekennzeichnet, dass** eine Pumpe (16) in dem Fernwärmenetz (6) angeordnet ist.

13. Verfahren zum Betrieb eines Heizkraftwerks, das eine Dampfturbine (1), wenigstens einen Speisewasservorwärmer (28, 18), wenigstens einen Wärmekondensator (4, 8) zum Vorheizen eines Wärmeträgers, der in einem Fernwärmenetz (6) zirkuliert, und einen Wärmespeicher (12) aufweist, der mit dem Fernwärmenetz (6) verbunden ist, **dadurch gekennzeichnet, dass** das Speisewasser mittels Wärme vorgewärmt werden kann, die in dem Wärmespeicher (12) gespeichert ist.

14. Verfahren nach Anspruch 13, **dadurch gekennzeichnet, dass** das Speisewasser im Falle hohen Strombedarfs mittels Wärme vorgewärmt wird, die in dem Wärmespeicher (12) gespeichert ist.

15. Verfahren nach Anspruch 13, **dadurch gekennzeichnet, dass** der Wärmespeicher (12) im Falle geringen Heizbedarfs in dem Fernwärmenetz (6) und/oder geringen Strombedarfs aufgeladen wird.

## Revendications

1. Centrale de cogénération comprenant une turbine à vapeur (1), au moins un préchauffeur d'eau d'alimentation (28, 18), au moins un condenseur de chaleur (4, 8) pour préchauffer un caloporteur circulant dans un réseau de chauffage urbain (6) et un accumulateur de chaleur (12) connecté au réseau de chauffage urbain (6), **caractérisée en ce que**, parallèlement à au moins un préchauffeur d'eau d'alimentation (28, 18), est agencé un échangeur de chaleur (36) dont le côté froid est configuré et agencé de manière à être traversé par l'eau d'alimentation et dont le côté chaud est configuré et agencé de manière à être connecté à l'accumulateur de chaleur (12).

2. Centrale de cogénération selon la revendication précédente, **caractérisée en ce que** le côté froid de l'échangeur de chaleur (36) est connecté à une ligne d'eau d'alimentation (20) via une ligne de dérivation (38).

3. Centrale de cogénération selon la revendication 2, **caractérisée en ce qu'**au moins une vanne de régulation (40.1, 40.2) est agencée dans la ligne de dérivation (38).

4. Centrale de cogénération selon l'une des revendications précédentes, **caractérisée en ce que** le côté chaud de l'échangeur de chaleur (36) est connecté à l'accumulateur de chaleur (12) via une ligne de connexion (42).

5. Centrale de cogénération selon la revendication 4, **caractérisée en ce qu'**au moins une vanne de régulation (44.1, 44.2, 44.3) est agencée dans la ligne de connexion (42).

6. Centrale de cogénération selon l'une des revendications précédentes, **caractérisée en ce que** la turbine à vapeur (1) est conçue comme une turbine à vapeur du type à soutirage.

7. Centrale de cogénération selon l'une quelconque des revendications précédentes, **caractérisée en ce que** l'accumulateur de chaleur (12) est agencé parallèlement à l'au moins un condenseur de chaleur (4, 8).

8. Centrale de cogénération selon l'une quelconque des revendications précédentes, **caractérisée en ce que**, dans une ligne d'eau d'alimentation (20) en amont et/ou en aval de l'au moins un préchauffeur d'eau d'alimentation (28, 18), est agencée une vanne de régulation (41.1, 41.2).

9. Centrale de cogénération selon l'une quelconque des revendications précédentes, **caractérisée en ce que**, dans le réseau de chauffage urbain (6) en amont et/ou en aval de l'au moins un condenseur de chaleur (4, 8), est agencée une vanne de régulation (50.1, 50.2).

10. Centrale de cogénération selon la revendication 1, **caractérisée en ce qu'**une pompe (16, 48) est agencée dans une ligne de connexion (14, 42).

11. Centrale de cogénération selon l'une quelconque des revendications 8 à 10, **caractérisée en ce qu'**une pompe (26), est agencée dans la ligne d'eau d'alimentation (20).

12. Centrale de cogénération selon l'une quelconque des revendications précédentes, **caractérisée en ce qu'**une pompe (16) est agencée dans le réseau de chauffage urbain (6).

13. Procédé pour faire fonctionner une centrale de cogénération comprenant une turbine à vapeur (1), au moins un préchauffeur d'eau d'alimentation (28, 18), au moins un condenseur de chaleur (4, 8) pour préchauffer un caloporteur circulant dans un réseau de chauffage urbain (6) et un accumulateur de chaleur (12) connecté au réseau de chauffage urbain (6), **caractérisé en ce que** l'eau d'alimentation peut être préchauffée par utilisation de la chaleur stockée dans l'accumulateur de chaleur (12).

14. Procédé selon la revendication 13, **caractérisé en ce que** l'eau d'alimentation est préchauffée par utilisation de la chaleur stockée dans l'accumulateur de chaleur (12) dans le cas d'une forte demande en électricité.

15. Procédé selon la revendication 13, **caractérisé en ce que** l'accumulateur de chaleur (12) est chargé dans le cas d'une faible demande en chaleur dans le réseau de chauffage urbain (6) et/ou d'une faible demande en électricité.
